# EUROPÄISCHE PATENTSCHRIFT

(11) **EP 0 825 526 B1**
(45) Veröffentlichungstag und Bekanntmachung des Hinweises auf die Patenterteilung: **19.01.2000**
(21) Anmeldenummer: 96440064.2
(22) Anmeldetag: 20.08.1996
(51) Int. Cl.: G06F 9/46

(54) **Verfahren zur Unterstützung der Interaktion zwischen einer ersten und einer zweiten Einheit**
Method for supporting interaction between two units
Procédé pour l'interaction entre deux unités

(43) Veröffentlichungstag der Anmeldung: 25.02.1998
(73) Patentinhaber: ALCATEL, 75008 Paris (FR)
(72) Erfinder: Carré, Laurent, 78960 Voisins-le-Bretonneux (FR); Hauw, Linda Hélène, 75013 Paris (FR)
(74) Vertreter: Kugler, Hermann, Dipl.-Phys.

(56) Entgegenhaltungen:
- IBM TECHNICAL DISCLOSURE BULLETIN, Bd. 38, Nr. 1, 1.Januar 1995, Seiten 177-180, XP000498730 "DISTRIBUTED OBJECT ENCAPSULATION OF CUSTOMER INFORMATION CONTROL SYST)7:2STR2B1T): TRA(SACT23( PR3C)SS2(G"
- IBM TECHNICAL DISCLOSURE BULLETIN, Bd. 38, Nr. 3, 1.März 1995, Seiten 617-619, XP000508157 "USE OF XA-COMPLIANT TO INTEROPERATE WITH OBJECT TRANSACTION SERVICE"

## Beschreibung

Die Erfindung betrifft ein Verfahren zur Unterstützung der Interaktion zwischen einer ersten Einheit, die gemäß einer ersten Beschreibungssprache spezifiziert ist, und einer zweiten Einheit, die gemäß einer zweiten Beschreibungssprache spezifiziert ist, nach dem Oberbegriff von Anspruch 1, ein Verfahren zur Interaktion einer ersten Einheit, die gemäß einer ersten Beschreibungssprache spezifiziert ist, mit einer zweiten Einheit, die gemöß einer zweiten Beschreibungssprache spezifiziert ist, nach dem Oberbegriff von Anspruch 5, ein Computersystem nach dem Oberbegriff von Anspruch 7, und eine Rechnereinheit nach dem Oberbegriff von Anspruch 10.

Für die softwaremäßige Realisierung von verteilten Computersystemen wird zunehmend die objektorientierte Modellierung als Architekturprinzip verwendet.

Eine solche Software - Architektur eines Computersystems ist die CORBA - Architektur (CORBA = Common Object Request Broker Architecture), die eine bedeutende Komponente der von der Object Management Group (OMG) spezifizierten OSA-Architektur (OSA = Object Service Architecture) ist. Objekte, die dieser Spezifikation folgen, im folgenden CORBA-Objekte genannt, sind mittels der Beschreibungssprache CORBA IDL (IDL = interface definition language) spezifiziert. Auch sämtliche Typen eines solchen Objektes sind in dieser Sprache, also CORBA IDL, spezifiziert.

Für den Bereich des Netzwerkmanagements ist von der OSI (Open System Interconnection) ein Objektmodell standardisiert (Management framework for open systems interconnection, ITU-T Recommendation X.700, 1992). Seine Objekte, die im folgenden OSI-Objekte genannt werden, sind in der Beschreibungssprache ASN.1 (Abstract Syntax Notation) verwendet. Sämtliche Typen eines solchen OSI-Objektes sind ebenfalls in dieser Sprache, also ASN.1, spezifiziert.

Die Erfindung geht nun davon aus, wie die Bearbeitung von Typen in einem Computersystem normalerweise realisiert ist. Für jeden Typ steht normalerweise eine Klasse zur Verfügung, die die Bearbeitung dieses einen Typs steuert.

Soll nun die Interaktion zwischen Objekten, die in unterschiedlichen Beschreibungssprachen spezifiziert sind, ermöglicht werden, so treten Probleme auf: Die Typen sind in den Objekten auf unterschiedliche Weise spezifiziert, beispielsweise in ASN.1 in OSI-Objekten und in CORBA-IDL in CORBA Objekten. Für eine Interaktion sind deshalb Mechanismen erforderlich, die eine Typ-Interoperabilität ermöglichen.

Der Erfindung liegt nun die Aufgabe zugrunde, die Interaktion zwischen Objekten, die in unterschiedlichen Beschreibungssprachen spezifiziert sind, zu unterstützen.

Diese Aufgabe wird gelöst durch Verfahren nach den Lehren von Anspruch 1 und 5, durch ein Computersystem nach der Lehre von Anspruch 7, und durch eine Rechnereinheit nach der Lehre von Anspruch 10.

Der Erfindung liegt hierbei der Gedanke zugrunde, daß hybride Klassen zur Verfügung gestellt werden, die sowohl die Bearbeitung von Typen, die gemäß einer ersten Beschreibungssprache spezifiziert sind, als auch die Bearbeitung der korrespondierenden Typen gemäß der zweiten Beschreibungssprache steuern. Mittels einer solchen hybriden Klasse können so sowohl Typen,die in der ersten Beschreibungssprache spezifiziert sind, im Kontext der zweiten Beschreibungssprache manipuliert werden, als auch umgekehrt.

Bei solchen Typen kann es sich vorzugsweise um Daten-Typen handeln. Bei Daten Typen handelt es sich um Kategorisierung von zu bearbeitenden Operations-Argumenten, die typischer Weise beides enthalten, sowohl das Verhalten als auch die Darstellung.

Eine Klasse ist ein abstrakter Daten-Typ, der ein oder mehrere statische oder dynamische Datentypen und Operationen, genannt "Methode", "verkapselt" (encapsulate), also umschließt. Eine Klasse ist darüberhinaus eine Implementierung, die Objekte (object instances), die dieser Objekt-Klasse angehören und alle ein ähnliches Verhalten zeigen, erzeugen kann.

Klassen spezifizieren Objekte entsprechend einer allgemeinen Implementierung.

Ein weiterer Vorteil dieser Erfindung ist, daß sie schnell ist, da Typdefinition und damit die Abbildung vor Programmablauf bereits erfolgt ist. Es müssen keine Entscheidungen während des Programmablaufs, beispielsweise das Abprüfen von Typen, durchgeführt werden.

Besonders Vorteilhaft ist es hierbei, die Erfindung auf den Bereich des Netzwerkmanagement anzuwenden, wenn dort sowohl OSI als auch CORBA-Einheiten vorhanden sind. Auf Grund des hohen Maßes an Interaktion, das in einer solchen Umgebung notwendig ist, ist hier die Anwendung der Erfindung besonders vorteilhaft.

Im Folgenden wird die Erfindung anhand eines Ausführungsbeispiels unter Zuhilfenahme beiliegender Zeichnungen beispielhaft erläutert:
Fig. 1 zeigt ein Blockschaltbild eines erfindungsgemäßen Computersystems.
Fig. 2a zeigt eine funktionelle Darstellung einer ersten Möglichkeit der Interaktion zwischen unterschiedlich spezifizierten Objekten.
Fig. 2b zeigt eine funktionelle Darstellung einer zweiten Möglichkeit der Interaktion zwischen unterschiedlich spezifizierten Objekten.
Fig. 3a zeigt eine funktionelle Darstellung einer dritten Möglichkeit der Interaktion zwischen unterschiedlich spezifizierten Objekten.

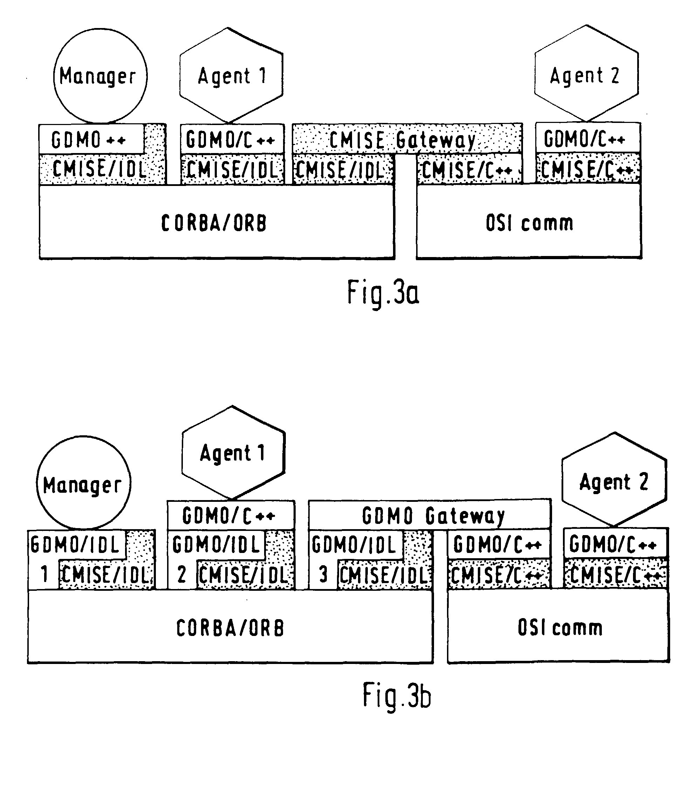

Fig. 3a zeigt eine funktionelle Darstellung einer vierten Möglichkeit der Interaktion zwischen unterschiedliche spezifizierten Objekten.

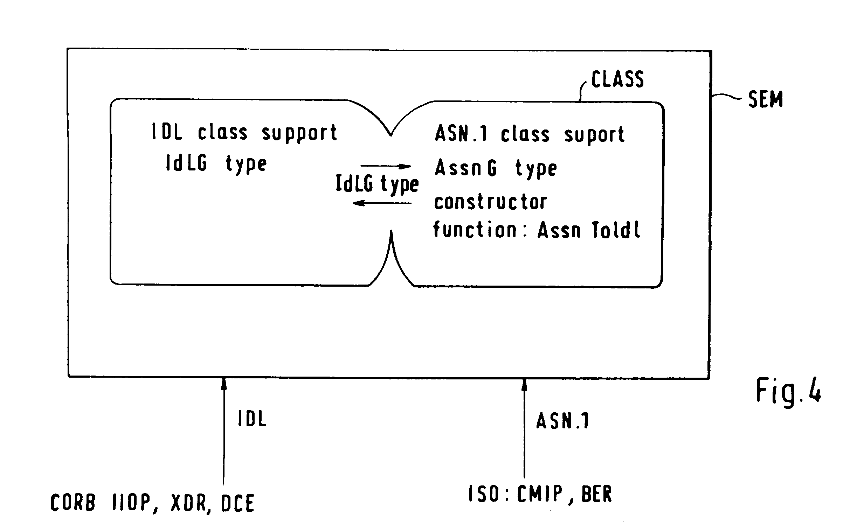

Fig. 4 zeigt eine logische Darstellung des Interoperabilitäts-Prinzips.

In dem Ausführungsbeispiel wird die Durchführung der erfindungsgemäßen Verfahren in einem erfindungsgemäßen Computersystem beschrieben, das aus einem oder aus mehreren erfindungsgemäßen Rechnereinheiten besteht, auf denen jeweils ein oder mehrere Programm-Module ablaufen.

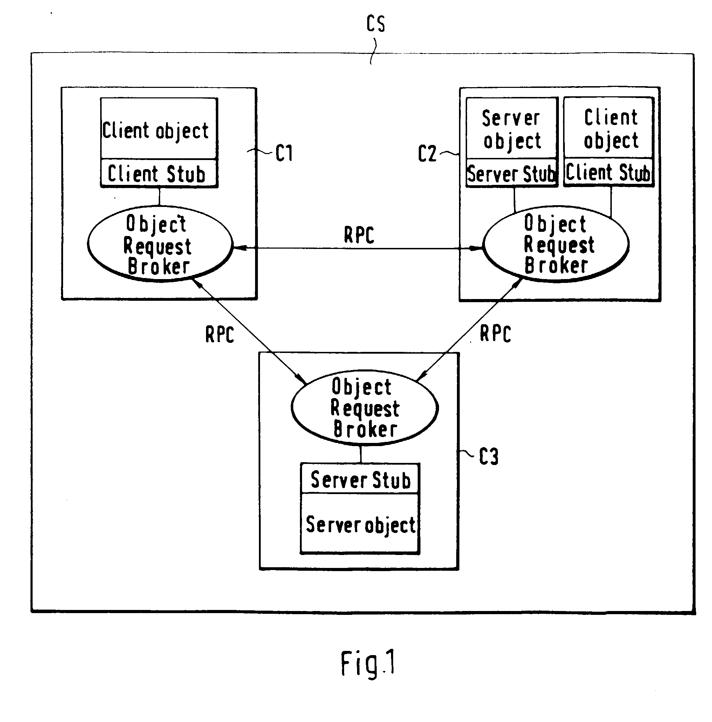

Fig. 1 zeigt ein Computersystem CS mit drei Rechnereinheiten C1 bis C3, die untereinander kommunizieren.

Bei den Rechnereinheiten C1 bis C3 handelt es sich beispielsweise um Computer, Drucker oder um Netzelemente eines Kommunikationsnetzes. Sie weisen jeweils eine Hardware-Plattform, bestehend aus Prozessoren, Speichereinrichtungen und peripheren Komponenten, eine Software-Plattform, die beispielsweise ein Betriebssystem und ein Datenbanksystem umfaßt, und Anwendungen auf, die von auf der Software-Plattform ablaufenden Anwendungs-Programm-Modulen gebildet werden. Die Rechnereinheiten C1 bis C3 sind durch ein oder mehrere Kommunikationsnetze untereinander verbunden, beispielsweise durch X.25, #7, Ethernt oder Token-Ring Kommunikationssysteme. Die Software-Plattform der Rechnereinheiten C1 bis C3 stellt hierbei die notwendigen Datenübertragungsdienste bereit.

Die Anwendungs-Programm-Module sind als Objekte (Managed object) modelliert, d. h. der Code und die Daten eines Objektes werden durch eine Summe von Attributen und Funktionen repräsentiert, auf die andere Objekte zugreifen können. Durch das wechselseitige Zugreifen einer Vielzahl solcher Objekte werden sodann die Anwendungsfunktionen des Computersystems CS erbracht.

Gemäß der CORBA-Architektur weisen die Rechnereinheiten C1 bis C3 mehrere Objekte CO und SO und mehrere Objekt-Anforderungs-Broker (Object Request Broker) ORB auf.

Aus der Dienstsicht können die Objekte CO und SO jeweils als eine verkapselte Einheit betrachtet werden, die einen oder mehrere Dienste zur Verfügung stellt, die von einem Klienten (client) angefordert werden können. Die Objekte CO fordern hierbei Dienste an (Client Object), die von den Objekten SO erbracht werden (Server Objects).

Zum Anfordern eines Dienstes sendet ein CO eine Anforderungs-Nachricht (request) an ein SO. Eine solche Anforderungs-Nachricht enthält hierbei folgende Informationen: eine Operation, ein Ziel-Objekt, keinen oder mehrere Parameter und optional einen Anforderungs-Kontext (request context). Nach Erbringen des Dienstes sendet das SO eine Ergebnis-Nachricht (outcome) an das CO zurück, das für diese Anforderungsnachricht definiert ist.

Zum Senden und zum Empfang der Anforderungs- und Ergebnisnachrichten steht den Objekten SO und CO eine Schnittstelleneinheit IU zur Verfügung.

Die Objekt-Anforderungs-Broker (ORB) stellen eine Infrastruktur zur Verfügung, die es den Objekten erlaubt, in einer verteilten Umgebung zu kommunizieren. Für die Objekte CO ist es damit nicht von Bedeutung auf welcher der anderen der Rechnereinheiten C1 bis C3 ein Objekt SO, dessen Dienst sie anfordern wollen, angesiedelt ist und auf welcher speziellen Plattform oder in welchem Implementierungsverfahren das Objekt realisiert ist.

Jedes Objekt kennt hierzu zumindest einen Objekt-Anforderungs-Broker ORB und weiß, wie sie diesen lokalen Objekt-Anforderungs-Broker zu kontaktieren hat. Jeder Objekt-Anforderungs-Broker weiß wie er andere Objekt-Anforderungs-Broker kontaktieren kann und wie er mit ihnen zu kommunizieren hat. Hierfür verwendet er das RPC-Verfahren (RPC = remote procedure call mechanisms). Ein Objekt sendet somit eine Anforderungsnachricht an einen der Objekt-Anforderungs-Broker ORB, das Weiterreichen der Anforderungsnachricht an das Ziel-Objekt wird durch die von dem Objekt-Anforderungs-Broker ORB gebildete CORBA-Infrastruktur erledigt.

Um über die CORBA-Infrastruktur mittels CORBA-Mechanismen interagieren zu können und mit anderen Objekten auf dieser Infrastruktur zusammenarbeiten zu können, muß jedes der Objekte CO und SO über eine CORBA spezifische Schnittstelle (Interface) verfügen. Ein solche Schnittstelle enthält hierbei eine Beschreibung eines Satzes von möglichen Operationen, die ein anderes Objekt von diesem Objekt anfordern kann. Die Schnittstellen der Objekte sind hierbei in der Beschreibungssprache IDL (Interface Definition Language) definiert, bei der es sich um eine reine Schniffstellen-Beschreibungssprache handelt. Die Vererbung (inheritance) dieser Interfaces erlaubt es, daß ein Objekt mehrere Schnittstellen unterstützt.

In CORBA wird auf ein Objekt direkt über diese CORBA spezifische Schnittstelle zugegriffen. Die Implementierung dieser Schnittstelle ist das Objekt selbst. Es besteht aus Code und Daten und benötigt somit keine Ausführungsinstanz (Agent entity), wie dies der Fall ist, wenn ein Objekt rein durch eine Datenstruktur repräsentiert ist.

Das Computersystem enthält nun neben den Objekten CO und SO weitere Objekte, die nicht in Fig. 1 gezeigt sind. Diese sind nicht in CORBA spezifiziert und interagieren über spezielle Schnittstelleneinheiten über die oben beschriebene CORBA-Infrastruktur untereinander und mit den Objekten CO und SO.

Die Verwendung solcher hybrider Komponenten auf einer CORBA-Infrastruktur hat hierbei den Vorteil, daß bereits bestehende, gemäß einer anderen Objekt-Modell Architektur spezifizierte Objekte wiederverwendet werden können und eine Zusammenarbeit solcher Objekte mit CORBA Objekten ermöglicht wird. Dies hat vor allem im Bereich des Netzwerkmanagement große Vorteile, da in diesem Bereich bereits eine Vielzahl von Objekten bestehen, die gemäß des OSI-Objektmodells spezifiziert sind. OSI-Netzwerkmanagent-Komponenten, beispielsweise Manager, Agent, Mediation Device, werden jeweils von einem oder mehreren solche OSI-Objekte gebildet.

Für den Bereich des Netzwerkmanagements ist von der OSI (Open System Interconnection) ein Objektmodell standardisiert (Management framework for open systems interconnection, ITU-T Recommendation X.700, 1992). Neben dem Objektmodell (SMI = Structure of Management Information) sind auch grundlegende Objekte, ein Set von Management Diensten (CMIS common management information service definition) und ein Netzwerkmanagement-Protokoll (CMIP = Common Management Information Protocol) zur Kommunikation der Objekte untereinander spezifiziert. Objekte sind in der Beschreibungssprache GEMO spezifiziert, die ASN Syntax verwendet und weitere eigene Makros enthält.

Der Prinzipielle Unterschied zwischen natürlichen" CORBA-Objekten und natürlichen" OSI-Objekten besteht darin, daß die CORBA Objekte die Implementierung der CORBA-Schnittstelle darstellen, wohingegen die OSI-Objekte eines Netzwerkmanagementselements als Datenstruktur im MIB-Datensatz (Management Information Base) abgelegt sind und durch einen Agenten, mit dem mittels des CEMIP-Protokolls kommuniziert wird, manipuliert werden. Darüberhinaus sind ihre Datentypen in unterschiedlichen Beschreibungssprachen spezifiziert, nämlich in CORBA IDL und in ASN.1 und damit nicht kompatibel.

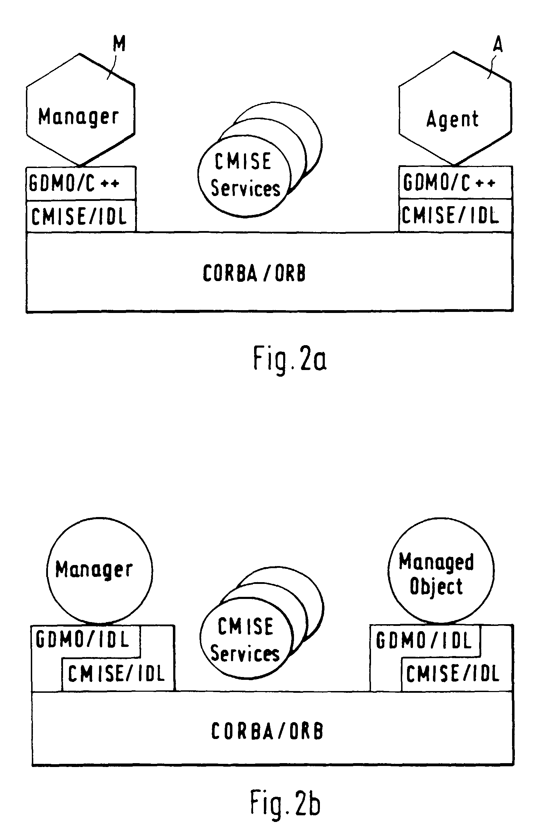

In Fig. 2a, Fig. 2b, Fig. 3a und Fig. 3b sind nun mögliche Implementierungen von OSI Einheiten auf einer CORBA Infrastruktur und gleichzeitig Mögliche Arten der Interaktion zwischen CORBA Einheiten und OSI Einheiten über eine CORBA Infrastruktur aufgezeigt. Die Möglichkeit der Interaktion über eine CORBA Infrastruktur impliziert hierbei solch eine Interaktion zwischen Einheiten in unterschiedlicher Spezifizierungssprache. Es erfordert die gleiche Vorgehensweise. Als Einheit wird hierbei ein Gebilde mit einem oder mehreren Objekten betrachtet.

Fig. 2a zeigt eine Kommunikationsschicht CORB/ORB, mehrere über diese Kommunikationsschicht allgemein zur Verfügung stehende Dienste CMISE Services, zwei Netzwerkmanagement-Komponenten M und A und jeweils zwei zwischen diesen Objekten und der Kommunikationsschicht CORB/ORB gelegenen Kommunikationsfunktionen GMO/C++ und CMISE/IDL.

Bei den Komponenten M und A handelte es sich nicht um CORBA-Objekte, sondern jeweils um ein oder mehrere OSI- Objekte OM bzw. OA und einer Manager bzw. Agent Funktionseinheit. Jede der Komponenten M und A stellt somit eine OSI Einheit dar. Mittels der Agent bzw. Manger Funktionseinheit werden Operationen auf diesen Objekten ausgeführt bzw. Anforderung an andere Objekte versendet. Agent und Manager Funktionseinheit kommunizieren über das CMIP-Protokoll. Aus der Sichtweise des Netzwerkmanagement nimmt die Komponente M die Rolle eines Managers (Manager) und die Komponente A die eines Agenten (Agent) ein.

Die Kommuniktationseinheit GDMO/C++ besteht aus einem oder mehreren speziellen Zugriffs-Objekten, die die Ausführung von CMISE Operationen auf den Objekten OA oder OM ermöglichen.

Die CMISE Management Dienste werden durch ein CMISE-Objekt auf der Seite des Objektes OA realisiert. Die Schnittstelleneinheit CMISE/IDL enthält dieses CMISE-Objekt und die diesem Objekt zugeordneten Dienste. Das CMISE-Objekt der Schnittstelleneinheit CMISE/IDL ist durch ein IDL-Interface spezifiziert und agiert und erscheint so nach außen wie ein CORBA-Objekt. Um diese Spezifizierung und damit die Bereitstellung einer CORBA-Schnittstelle zu dem Objekt OA zu ermöglichen, ist eine Typkonvertierung oder Typ-Interoperabiletät von ASN.1 in IDL Typen notwendig. Wie diese Type-Interoperabilität erreicht wird, wird später anhand von Fig. 4 dargestellt. CMISE-Dienste stellen somit als ein Set von CORBA Objekten zur Verfügung. Durch über die CORBA-Infrastruktur geleitet CORBA-Anforderung können so CMISE-Operationen auf dem Objekt OA ausgeführt werden. Gleiches gilt für das Objekt MO.

Eine zweite Möglichkeit der Anbindung von OSI-Einheiten über eine CORBA-Infrastruktur ist in Fig. 2b aufgezeigt

Fig. 2b zeigt die Kommunikationsschicht CORB/ORB, mehrere über diese Kommunikationsschicht allgemein zur Verfügung stehende Dienste CMISE Services, die Objekte OM und OA und jeweils zwei zwischen diesen Objekten und der Kommunikationsschicht CORB/ORB gelegenen Kommunikationsfunktionen GDMO/IDL und CMISE/IDL

Durch die Schnittstelleneinheit GDMO/IDL werden die in GDMO spezifizierten OSI-Objekte der Komponenten A und M in eine Spezifikation als IDL Schnittstelle übersetzt. Auf ein so spezifiziertes Objekt kann durch klassische CORBA-Nachrichten zugegriffen werden. Jedes dieser OSI-Objekt wird somit in ein reines CORBA Objekt transformiert. Da die Spezifikation in IDL und ASN.1 von unterschiedlicher Natur sind (Schnittstellenbeschreibung <-> Objekt-Spezifikation) ist keine vollkommene Übersetzung möglich und nur ein Untermenge von CMISE-Diensten wird über die Schnittstelleneinheit GDMO/IDL angeboten. Dies bedeutet, daß nur eine Untermenge von CMISE Operationen auf den transformierten CORBA-Objekten ausführbar ist.

In Fig. 3a und Fig. 3b sind weitere Möglichkeiten der Interaktion zwischen Netzwerkmanagement-Komponenten dargestellt, wobei hier ein Gateway GATE eingebunden wird. Die genaue Funktionsweise ergibt sich aus der Darstellung in den Figuren 3a und 3b zusammen mit der Beschreibung der korrespondieren Einheiten, die bereits in der Beschreibung zu den Figuren 2a und 2b gemacht wurde.

Die Typinteroperabilität wird nun wie folgt erreicht :

Typen im ISO Kontext sind in der Beschreibungssprache ASN.1 und Typen im CORBA Kontext in in der Beschreibungssprache IDL definiert. Die erforderliche Unterstützung für diese Typen in jedem Kontext muß gesteuert werden. Diese Unterstützung ist jeweils in Klassen implementiert, sowohl in CORBA Einheiten als auch in OSI Einheiten. Als Klassen werden hierbei folgende gewählt:
- Die Klassen, die die Unterstützung der Typen in der Beschreibungssprache IDL in CORBA Einheiten bereitstellen. Diese Klassen werden im folgenden IdlG Klassen genannt. Hierbei ist anzumerken, daß normalerweise eine Klasse für einen Typ zuständig ist.
- Die Klassen, die die Unterstützung der Typen in der Beschreibungssprache ASN.1 in OSI Einheiten bereitstellen. Diese Klassen werden im folgenden AsnG Klassen genannt.

Die Vorgehensweise ist zweigeteilt. Dies wird im Folgenden anhand eines Sender/ Empfänger Paars aufgezeigt:
Um die Behandlung von IdlG Typen in einer OSI Einheit zu unterstützen, wird der korrespondierende AsnG Typ aus dem IdlG Typ konstruiert. Hierfür wird ein "constructor", also ein Steuerelement zum erzeugen eines Programm-Objekts zu der Klasse hinzugefügt, die den AsnG Typ unterstützt. Dieser construdor" nimmt eine IdlG Typen als Parameter. Dadurch unterstützt diese AsnG Klasse auch die Bearbeitung des korrespondierenden IdlG Typs.

Um die Verwendung von AsnG Typen in einer CORBA Einheit zu ermöglichen, wird der AsnG Typ in den korrespondierenden IdlG Typen transformiert. Dies wird dadurch erreicht, daß eine neue Funktion zu der Klasse hinzugefügt wird, die diesen AsnG Typen unterstützt. Diese Funktion nimmt den AsnG Typen als Parameter und gibt den korrespondierenden IdlG Typen zurück.

Fig. 4 zeigt nun eine logische Darstellung dieses Interoperabilitäts-Prinzips:

Fig. 4 zeigt die Einheit SEM und die Klasse CLASS.

Die Einheit SEM stellt die gesamte Semantik, den Inhalt eines Objektes dar. Ein Teil davon ist die Klasse CLASS, die Syntaxbeschreibungen behandelt. Diese Klasse CLASS empfängt Typen unterschiedlicher Syntax, Typen in der Beschreibungssprache IDL und ASN.1. Sie liefert Unterstützung für die korrspondierenden unterschiedlichen Typen IdlG und AsnG. Die Unterstützung der IdlG Typen wird hierbei wie oben beschrieben bereitgestellt, indem über einen "construcor" IdlG Typen erzeugt und über ein Funktion AsnG Typen in IdlG Typen konvertiert werden.

## Patentansprüche

1. Verfahren zur Unterstützung der Interaktion zwischen einer ersten Einheit von zumindest einem Objekt, die gemäß einer ersten Beschreibungssprache spezifiziert ist, und einer zweiten Einheit von zumindest einem Objekt, die gemäß einer zweiten Beschreibungssprache spezifiziert ist, wobei den beiden Einheiten jeweils Klassen zur Verfügung gestellt werden, die die Bearbeitung von Typen steuern,
**dadurch gekennzeichnet,** daß der ersten Einheit und/oder der zweiten Einheit eine oder mehrere hybride Klassen zur Verfügung gestellt werden, die jeweils sowohl die Bearbeitung eines gemäß der ersten Beschreibungssprache spezifizierten Typs als auch die Bearbeitung eines, diesem Typ entsprechenden, in einen Typen gemäß der zweiten Beschreibungssprache konvertierten Typs steuern.

2. Verfahren nach Anspruch 1, dadurch gekennzeichnet, daß als erste Beschreibungssprache für die Spezifizierung von Typen ASN.1 verwendet wird.

3. Verfahren nach Anspruch 1, dadurch gekennzeichnet, daß als zweite Beschreibungssprache für die Spezifizierung von Typen CORBA-IDL verwendet wird.

4. Verfahren nach Anspruch 1, dadurch gekennzeichnet, daß die hybride Klasse oder die hybriden Klassen eine Konvertierung zwischen Typen gemäß der ersten Beschreibungssprache und Typen gemäß der zweiten Beschreibungssprache durchführen.

5. Verfahren zur Interaktion einer ersten Einheit von zumindest einem Objekt, die gemäß einer ersten Beschreibungssprache spezifiziert ist, mit einer zweiten Einheit von zumindest einem Objekt, die gemäß einer zweiten Beschreibungssprache spezifiziert ist, wobei der ersten Einheit Klassen zur Verfügung gestellt werden, die die Bearbeitung von Typen steuern, **dadurch gekennzeichnet,** daß der ersten Einheit eine oder mehrere hybride Klassen zur Verfügung gestellt werden, die jeweils sowohl die Bearbeitung eines gemäß der ersten Beschreibungssprache spezifizierten Typs als auch die Bearbeitung eines, diesem Typ entsprechenden, in einen Typen gemäß der zweiten Beschreibungssprache konvertierten Typs steuern.

6. Verfahren nach Anspruch 5, dadurch gekennzeichnet, daß die hybride Klasse oder eine der hybriden Klassen im Interface des zumindest einen Objektes der ersten Einheit angeboten wird.

7. Computersystem mit mindestens einer ersten Einheit von zumindest einem Objekt, die gemäß einer ersten Beschreibungssprache spezifiziert ist und mit mindestens einer zweiten Einheit von zumindest einem Objekt, die gemäß einer zweiten Beschreibungssprache spezifiziert ist, wobei den beiden Einheiten jeweils Klassen zur Verfügung stehen, die die Bearbeitung von Typen steuern,
**dadurch gekennzeichnet,** daß der ersten Einheit und/oder der zweiten Einheit eine oder mehrere hybride Klassen zur Verfügung stehen, die so ausgestaltet sind, daß sie jeweils sowohl die Bearbeitung eines gemäß der ersten Beschreibungssprache spezifizierten Typs als auch die Bearbeitung eines, diesem Typ entsprechenden, in einen Typen gemäß der zweiten Beschreibungssprache konvertierten Typs steuern.

8. Computersystem nach Anspruch 7, dadurch gekennzeichnet, daß die erste Einheit eine OSI-Einheit ist.

9. Computersystem nach Anspruch 7, dadurch gekennzeichnet, daß die zweite Einheit eine CORBA-Einheit ist.

10. Rechnereinheit mit einem Programm-Modul, das gemäß einer ersten Beschreibungssprache spezifiziert ist und in dem ein oder mehrere Klassen zur Verfügung stehen, die die Bearbeitung von Typen steuern,
**dadurch gekennzeichnet,** daß in dem Programm-Modul eine oder mehrere hybride Klassen zur Verfügung stehen, die so ausgestaltet sind, daß sie jeweils sowohl die Bearbeitung eines gemäß der ersten Beschreibungssprache spezifizierten Typs als auch die Bearbeitung eines, diesem Typ entsprechenden, in einen Typen gemäß der zweiten Beschreibungssprache konvertierten Typs steuern.

## Claims

1. A method of supporting interaction between a first entity of at least one object, which is specified according to a first specification language, and a second entity of at least one object, which is specified according to a second specification language, each of the two units being provided with classes which control the processing of types,
**characterized in** that the first entity and/or the second entity are provided with one or more hybrid classes which control both the processing of a type specified according to the first specification language and the processing of a type corresponding to said type and converted to a type according to the second specification language.

2. A method as claimed in claim 1, characterized in that as the first specification language for specifying types, ASN.1 is used.

3. A method as claimed in claim 1, characterized in that as the second specification language for specifying types, CORBA IDL is used.

4. A method as claimed in claim 1, characterized in that the hybrid class or the hybrid classes perform a conversion between types according to the first specification language and types according to the second specification language.

5. A method for interaction between a first entity of at least one object, which is specified according to a first specification language, and a second entity of at least one object, which is specified according to a second specification language, the first unit being provided with classes which control the processing of types,
**characterized in** that the first unit is provided with one or more hybrid classes which control both the processing of a type specified according to the first specification language and the processing of a type corresponding to said type and converted to a type according to the second specification language.

6. A method as claimed in claim 5, characterized in that the first entity is formed by at least one object, and that the hybrid class or one of the hybrid classes is offered in the interface of the at least one object of the first entity.

7. A computer system comprising at least one first entity of at least one object, which is specified according to a first specification language, and at least one second entity of at least one object, which is specified according to a second specification language, each of the two entities being provided with classes which control the processing of types,
**characterized in** that the first entity and/or the second entity are provided with one or more hybrid classes designed to control both the processing of a type specified according to the first specification language and the processing of a type corresponding to said type and converted to a type according to the second specification language.

8. A computer system as claimed in claim 7,
characterized in that the first entity is an OSI entity.

9. A computer system as claimed in claim 7,
characterized in that the second entity is a CORBA entity.

10. A computer entity comprising a program module specified according to a first specification language and provided with one or more classes which control the processing of types,
**characterized in** that the program module is provided with one or more hybrid classes designed to control both the processing of a type specified according to the first specification language and the processing of a type corresponding to said type and converted to a type according to the second specification language.

## Revendications

1. Procédé pour supporter l'interaction entre une première unité composée d'au moins un objet, qui est spécifiée selon un premier langage de description, et une deuxième unité composée d'au moins un objet, qui est spécifiée selon un deuxième langage de description, dans lequel on met à la disposition des deux unités des classes qui commandent le traitement de types, caractérisé en ce que l'on met à la disposition de la première unité et/ou de la deuxième unité une ou plusieurs classes hybrides qui commandent respectivement aussi bien le traitement d'un type spécifié selon le premier langage de description que le traitement d'un type correspondant audit type converti en un type selon le deuxième langage de description.

2. Procédé selon la revendication 1, caractérisé en ce que ASN.1 est utilisé comme premier langage de description pour la spécification de types.

3. Procédé selon la revendication 1, caractérisé en ce que CORBA-IDL est utilisé comme deuxième langage de description pour la spécification de types.

4. Procédé selon la revendication 1, caractérisé en ce que la classe hybride ou les classes hybrides effectuent une conversion entre des types selon le premier langage de description et des types selon le deuxième langage de description.

5. Procédé pour l'interaction d'une première unité composée d'au moins un objet, qui est spécifiée selon un premier langage de description, avec une deuxième unité composée d'au moins un objet, qui est spécifiée selon un deuxième langage de description, dans lequel on met à la disposition de la première unité des classes qui commandent le traitement de types, caractérisé en ce que l'on met à la disposition de la première unité une ou plusieurs classes hybrides qui commandent respectivement aussi bien le traitement d'un type spécifié selon le premier langage de description que le traitement d'un type correspondant audit type et converti en un type selon le deuxième langage de description.

6. Procédé selon la revendication 5, caractérisé en ce que la classe hybride, ou l'une des classes hybrides, est proposée dans l'interface dudit au moins un objet de la première unité.

7. Système informatique avec au moins une première unité composée d'au moins un objet, qui est spécifiée selon un premier langage de description, et avec au moins une deuxième unité d'au moins un objet, qui est spécifiée selon un deuxième langage de description, dans lequel on met à la disposition des deux unités respectivement des classes qui commandent le traitement de types, caractérisé en ce que l'on met à la disposition de la première unité et/ou de la deuxième unité une ou plusieurs classes hybrides qui sont réalisées de telle sorte qu'elles commandent respectivement aussi bien le traitement d'un type spécifié selon le premier langage de description que le traitement d'un type correspondant audit type et converti en un type selon le deuxième langage de description.

8. Système informatique selon la revendication 7, caractérisé en ce que la première unité est une unité OSI.

9. Système informatique selon la revendication 7, caractérisé en ce que la deuxième unité est une unité CORBA.

10. Unité de calcul avec un module de programme qui est spécifié selon un premier langage de description et dans lequel une ou plusieurs classes sont disponibles qui commandent la description de types, caractérisée en ce que dans le module de programme, une ou plusieurs classes hybrides sont disponibles qui sont réalisées de telle sorte qu'elles commandent respectivement aussi bien le traitement d'un type spécifié selon le premier langage de description que le traitement d'un type correspondant audit type et converti en un type selon le deuxième langage de description.
